# FASCICULE DE BREVET EUROPEEN

(11) **EP 2 000 341 B1**
(45) Date de publication et mention de la délivrance du brevet: **16.03.2011**
(21) Numéro de dépôt: 08155404.0
(22) Date de dépôt: 29.04.2008
(51) Int. Cl.: B60J 5/04, B60J 10/08

(54) **Ensemble pour portière de véhicule automobile**
Einheit für Fahrzeugtür eines Kraftfahrzeugs
Assembly for an automobile vehicle door

(30) Priorité: 08.06.2007 FR 0755608
(43) Date de publication de la demande: 10.12.2008
(73) Titulaire: PEUGEOT CITROËN AUTOMOBILES S.A., 78140 Vélizy Villacoublay (FR)
(72) Inventeur: Schmitt, Jean-Charles, 90000 Belfort (FR)
(74) Mandataire: Allain, Laurent

(56) Documents cités:
- EP-A- 0 440 002
- EP-B1- 0 855 965
- WO-A-96/08387
- DE-A1- 19 538 595
- DE-C1- 10 159 251
- US-B1- 6 357 182

## Description

La présente invention concerne un ensemble pour portière de véhicule automobile, du type comportant :
- une doublure de porte ;
- un renfort de doublure de porte renforçant la doublure dans un encadrement de vitre ; et
- un enjoliveur longeant une partie supérieure de l'encadrement de vitre,

la doublure et le renfort étant superposés sur leurs bords supérieurs respectifs et l'enjoliveur coiffant lesdits bords.

Un tel ensemble est décrit dans WO 96/08387 (DRAFTEX).

On connaît, dans l'état de la technique, de tels ensembles dans lesquels la doublure et le renfort sont assemblés par sertissage.

Cependant, de par la présence du serti, ces ensembles sont complexes et génèrent des efforts de montage importants.

L'invention a pour but de proposer un ensemble simple qui favorise la qualité d'accostage de l'assemblage et limite les efforts d'assemblage de l'enjoliveur.

A cet effet, l'invention a pour objet un ensemble pour portière de véhicule automobile, du type précité, caractérisé en ce que la doublure et le renfort sont fixés l'un à l'autre par soudure laser.

L'ensemble selon l'invention peut comporter une ou plusieurs des caractéristiques suivantes :
- la soudure laser comprend des cordons de soudure ;
- l'enjoliveur présente une partie formant logement élastiquement déformable pour recevoir et coiffer par pincement lesdits bords ;
- l'enjoliveur comporte, sur l'une au moins de ses surfaces en regard de la doublure et du renfort, des saillies de positionnement propres à éviter un mouvement relatif entre l'enjoliveur et le système doublure/renfort ;
- les saillies de positionnement comprennent plusieurs ergots adaptés pour s'insérer dans des lumières correspondantes ménagées dans la doublure et le renfort ;
- les ergots possèdent une section transversale sensiblement circulaire et les lumières ont alors une forme correspondante sensiblement circulaire, de sorte qu'ils coopèrent entre eux longitudinalement et/ou transversalement avec un jeu inférieur à 2 mm; et
- les ergots sont répartis sensiblement régulièrement sur la longueur de l'enjoliveur, avec des intervalles compris entre 80 mm et 120 mm.

L'invention a également pour objet un véhicule automobile, caractérisé en ce qu'il comprend au moins un ensemble tel que décrit précédemment.

L'invention sera mieux comprise à la lecture de la description qui va suivre, donnée uniquement à titre d'exemple et faite en se référant aux dessins annexés, sur lesquels :
- la Figure 1 est une vue de côté partiellement écorchée d'un véhicule automobile équipé d'un ensemble selon l'invention ; et
- la Figure 2 est une vue en coupe verticale transversale suivant la ligne II-II de la Figure 1.

Afin de simplifier la description qui va suivre, les Figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

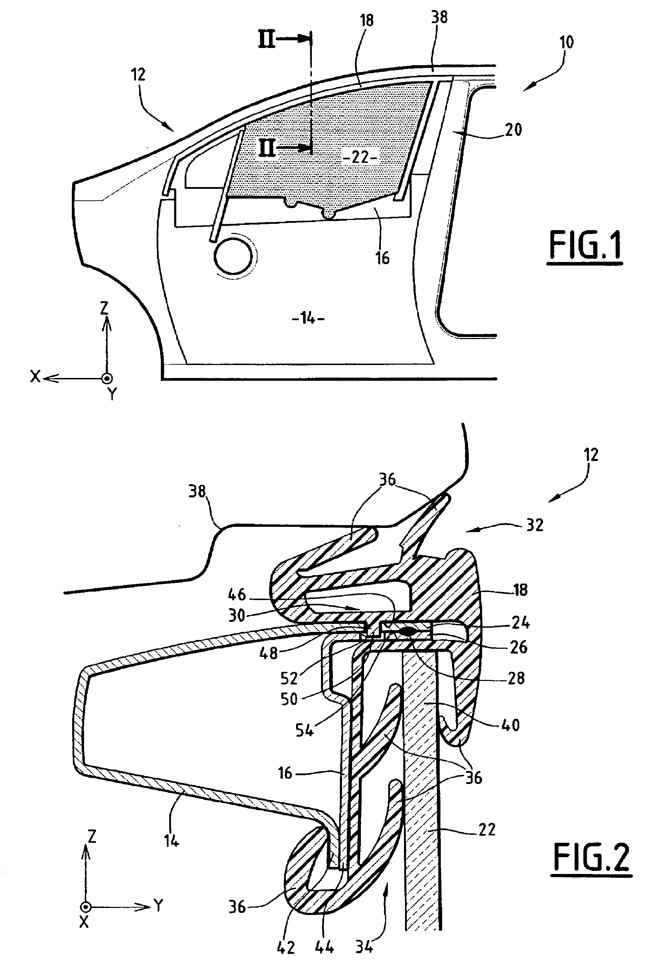

La Figure 1 représente, de façon simplifiée, le côté avant gauche d'un véhicule automobile 10 comportant un ensemble 12 pour portière.

L'ensemble 12 comprend une doublure de porte 14, un renfort 16 de doublure de porte et un enjoliveur 18.

Sur la Figure 1, la partie externe de la porte, généralement appelée peau de porte et fixée à la doublure de porte, n'est pas représentée.

Le renfort 16 renforce la doublure 14 dans un encadrement 20 de vitre 22.

L'enjoliveur 18 longe une partie supérieure de l'encadrement 20 de vitre 22.

Comme on le voit mieux sur la Figure 2, la doublure 14 et le renfort 16 sont superposés sur leurs bords supérieurs respectifs 24, 26 et, selon l'invention, sont fixés l'un à l'autre par cordons de soudure 28.

Les cordons de soudure 28 sont de préférence des cordons de soudure laser.

L'enjoliveur 18 présente une partie centrale 30 formant logement élastiquement déformable pour recevoir et coiffer par pincement les bords supérieurs 24, 26 de la doublure 14 et du renfort 16.

Le coiffage par pincement/agrafage de la doublure 14 et du renfort 16 est réalisé par les surfaces supérieure 46 et inférieure 54 du logement défini par la partie centrale 30.

L'enjoliveur 18 comprend également une partie supérieure 32 et une partie inférieure 34 comportant toutes deux une pluralité de lèvres 36, au nombre de deux pour la partie supérieure 32 et de quatre pour la partie inférieure 34 dans l'exemple représenté.

Les lèvres 36 de la partie supérieure 32 sont adaptées pour coopérer avec le pavillon 38 du véhicule 10 et assurent une étanchéité lorsque la portière est fermée.

La vitre 22 vient au contact des lèvres 36 de la partie inférieure 34 de l'enjoliveur 18, de sorte que la partie inférieure 34 de l'enjoliveur 18 coiffe le bord supérieur 40 de la vitre 22 lorsque celle-ci est en position fermée. Les rebords inférieurs 42, 44 respectivement de la doublure 14 et du renfort 16 reçoivent les lèvres 36 de la partie inférieure 34.

L'enjoliveur 18 comporte en outre, sur la surface supérieure 46 de la partie centrale 30 en regard de la doublure 14 et du renfort 16, des saillies 48 de positionnement dirigées vers la zone intérieure du renfort 16 définie par la zone où la vitre 22 peut être présente et propres à éviter un mouvement relatif entre l'enjoliveur 18 et le système doublure 14 / renfort 16.

Les saillies 48 comprennent plusieurs ergots 50 adaptés pour s'insérer dans des lumières 52 correspondantes ménagées dans la doublure 14 et le renfort 16.

Les ergots 50 possèdent, dans l'exemple représenté, une section transversale sensiblement circulaire et les lumières 52 dans la doublure 14 ont alors une forme correspondante sensiblement circulaire, de sorte qu'ils coopèrent entre eux dans la direction Y avec des tolérances dans la direction X selon le système d'axes précédemment défini.

Dans l'exemple représenté, la lumière 52 dans le renfort 16 est plus grande que dans la doublure 14 pour assurer une position relative de l'enjoliveur 18 par rapport à la doublure 14. De plus, si la lumière 52 avait des dimensions identiques dans le renfort 16 et la doublure 14, une correspondance rigoureuse entre les deux parties de la lumière 52 serait nécessaire lors du montage.

Les ergots 50 sont répartis sensiblement régulièrement sur la longueur de l'enjoliveur 18, avec des intervalles compris entre 80 mm et 120 mm.

Dans l'exemple considéré, le jeu dans la direction X selon le système d'axes précédemment défini entre les ergots 50 et les lumières 52 sur le renfort 16 est sensiblement égal à 2 mm.

L'ensemble selon l'invention permet donc de garantir l'ouverture / fermeture du vitrage ainsi que la qualité des accostages de la portière sur la carrosserie du véhicule, tout en limitant, de manière simple, les efforts d'assemblage de l'enjoliveur.

De plus, la suppression du serti entre la doublure et le renfort permet non seulement de gagner de la matière et donc de réduire la masse de l'ensemble, mais permet également d'augmenter le clair de vitre et donc d'améliorer la visibilité des utilisateurs du véhicule.

Dans une variante au mode de réalisation décrit précédemment, les saillies 48 de positionnement sont dirigées vers l'extérieur de la zone où la vitre 22 peut être présente, donc être situées sur la surface inférieure 54 de la partie centrale 30 en regard de la doublure 14 et du renfort 16. Les saillies 48 peuvent aussi être situées sur les deux surfaces supérieure 46 et inférieure 54 de façon alternée.

Dans une autre variante encore, les ergots 50 possèdent une section transversale quelconque appropriée, par exemple carrée ou oblongue, et les lumières 52 ont alors une forme correspondante quelconque appropriée, par exemple carrée ou oblongue.

## Revendications

1. Ensemble (12) pour portière de véhicule automobile (10), du type comportant :
- une doublure de porte (14) ;
- un renfort (16) de doublure de porte renforçant la doublure (14) dans un encadrement (20) de vitre (22) ; et
- un enjoliveur (18) longeant une partie supérieure de l'encadrement (20) de vitre (22),
la doublure (14) et le renfort (16) étant superposés sur leurs bords supérieurs respectifs (24, 26) et l'enjoliveur (18) coiffant lesdits bords (24, 26), ladite doublure (14) et ledit renfort (16) étant fixés l'un à l'autre par soudure laser, et l'enjoliveur (18) comportant, sur l'une au moins de ses surfaces (46, 54) en regard de la doublure (14) et du renfort (16), des saillies (48) de positionnement propres à éviter un mouvement relatif entre l'enjoliveur (18) et le système doublure (14) / renfort (16),
**caractérisé en ce que** les saillies (48) de positionnement comprennent plusieurs ergots (50) adaptés pour s'insérer dans des lumières (52) correspondantes ménagées dans la doublure (14) et le renfort (16).

2. Ensemble (12) selon la revendication 1, **caractérisé en ce que** la soudure laser comprend des cordons de soudure (28).

3. Ensemble (12) selon la revendication 1 ou 2, **caractérisé en ce que** l'enjoliveur (18) présente une partie (30) formant logement élastiquement déformable pour recevoir et coiffer par pincement lesdits bords (24, 26).

4. Ensemble (12) selon la revendication 1, **caractérisé en ce que** les ergots (50) possèdent une section transversale sensiblement circulaire et les lumières (52) ont alors une forme correspondante sensiblement circulaire, de sorte qu'ils coopèrent entre eux longitudinalement et/ou transversalement avec un jeu inférieur à 2 mm.

5. Ensemble (12) selon la revendication 1 ou 4, **caractérisé en ce que** les ergots (50) sont répartis sensiblement régulièrement sur la longueur de l'enjoliveur (18), avec des intervalles compris entre 80 mm et 120 mm.

6. Véhicule automobile (10), **caractérisé en ce qu'**il comprend au moins un ensemble (12) selon l'une quelconque des revendications précédentes.

## Claims

1. Assembly (12) for an automobile vehicle door (10), of the type comprising:
- a door liner (14);
- a door liner reinforcement (16) reinforcing the liner (14) in a window (22) frame (20); and
- a trim (18) extending along an upper portion of the window (22) frame (20),
the liner (14) and the reinforcement (16) being superimposed on their respective upper edges (24, 26) and the trim (18) covering said edges (24, 26), said liner (14) and said reinforcement (16) being fastened to one another via laser welding, and the trim (18) comprising, on at least one of its surfaces (46, 54) across from the liner (14) and the reinforcement (16), positioning protrusions (48) able to prevent a relative movement between the trim (18) and the liner (14)/reinforcement (16) system,
**characterised in that** the positioning protrusions (48) include several lugs (50) adapted to be inserted into the corresponding holes (52) arranged in the liner (14) and the reinforcement (16).

2. Assembly (12) according to claim 1, **characterised in that** the laser welding comprises welding beads (28).

3. Assembly (12) according to claim 1 or 2, **characterised in that** the trim (18) has a portion (30) forming an elastically-deformable housing in order to receive and cover said edges (24, 26) by clamping.

4. Assembly (12) according to claim 1, **characterised in that** the lugs (50) have a substantially circular transversal section and the holes (52) thus have a corresponding substantially circular form, in such a way that they cooperate together longitudinally and/or transversally with a clearance of less than 2 mm.

5. Assembly (12) according to claim 1 or 4, **characterised in that** the lugs (50) are distributed substantially regularly across the length of the trim (18), with intervals between 80 mm and 120 mm.

6. Automobile vehicle (10), **characterised in that** it comprises at least one assembly (12) according to any of the preceding claims.

## Patentansprüche

1. Anordnung (12) für eine Kraftfahrzeugtür (10), von der Art umfassend:
- eine Türverkleidung (14);
- eine Türverkleidungsaussteifung (16), welche die Verkleidung (14) in einem Rahmen (20) eines Fensters (22) aussteift; und
- eine Zierleiste (18), die an einem oberen Teil des Rahmens (20) des Fensters (22) entlang geht,
wobei die Verkleidung (14) und die Aussteifung (16) an ihren jeweiligen oberen Rändern (24, 26) übereinander liegen und die Zierleiste (18) die Ränder (24, 26) bedeckt, wobei die Verkleidung (14) und die Aussteifung (16) miteinander durch eine Laser-Schweißverbindung befestigt sind, und die Zierleiste (18) auf mindestens einer ihrer Oberflächen (46, 54) gegenüber der Verkleidung (14) und der Aussteifung (16) Positionierungsvorsprünge (48) umfasst, die dazu geeignet sind, eine relative Bewegung zwischen der Zierleiste (18) und dem System aus Verkleidung (14)/ Aussteifung (16) zu vermeiden,
**dadurch gekennzeichnet, dass** die Positionierungsvorsprünge (48) mehrere Ansätze (50) umfassen, die dazu angepasst sind, um in entsprechende Öffnungen (52) eingefügt zu werden, die in der Verkleidung (14) und der Aussteifung (16) eingerichtet sind.

2. Anordnung (12) nach Anspruch 1, **dadurch gekennzeichnet, dass** die Laser-Schweißverbindung Schweißnähte (28) umfasst.

3. Anordnung (12) nach Anspruch 1 oder 2, **dadurch gekennzeichnet, dass** die Zierleiste (18) einen Teil (30) aufweist, der eine elastisch verformbare Aufnahme bildet, um die Ränder (24, 26) aufzunehmen und klemmend abzudecken.

4. Anordnung (12) nach Anspruch 1, **dadurch gekennzeichnet, dass** die Ansätze (50) einen im Wesentlichen kreisförmigen Querschnitt besitzen und die Öffnungen (52) dann eine entsprechende im Wesentlichen kreisförmige Form aufweisen, so dass sie untereinander längsseitig und/oder quer mit einem Spielraum von weniger als 2 mm zusammenwirken.

5. Anordnung (12) nach Anspruch 1 oder 4, **dadurch gekennzeichnet, dass** die Ansätze (50) im Wesentlichen gleichmäßig über die Länge der Zierleiste (18) verteilt sind, wobei die Zwischenräume zwischen 80 mm und 120 mm liegen.

6. Kraftfahrzeug (10), **dadurch gekennzeichnet, dass** es mindestens eine Anordnung (12) nach einem der vorhergehenden Ansprüche umfasst.
